(19)

Europäisches
Patentamt
European
Patent Office
Office européen
des brevets

(11) **EP 1 892 164 A2**

(12) **EUROPEAN PATENT APPLICATION**

(43) Date of publication:
**27.02.2008 Bulletin 2008/09**

(51) Int Cl.:
***B60T 7/10*** *(2006.01)*     ***B60T 13/74*** *(2006.01)*

(21) Application number: **07015817.5**

(22) Date of filing: **10.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **24.08.2006 JP 2006227296**

(71) Applicant: **Hitachi, Ltd.**
**Chiyoda-ku**
**Tokyo 100-8280 (JP)**

(72) Inventors:
• **Konishi, Yasufumi**
  **Chiyoda-ku**
  **Tokyo 100-8220 (JP)**
• **Kuragaki, Satoru**
  **Chiyoda-ku**
  **Tokyo 100-8220 (JP)**

(74) Representative: **Beetz & Partner**
**Steinsdorfstrasse 10**
**80538 München (DE)**

(54) **Electric braking apparatus and method of controlling thereof**

(57)     An electric braking apparatus having a conversion mechanism for generating a force for pressing or separating a brake friction member (1306, 1307) based on a rotational torque generated by an electric motor (1311), wherein a rotor angle position state of the electric motor (1311) and a brake process of the brake friction member which is pressed or separated are detected from rotational information of a rotational information obtaining unit, it is detected that the electric motor (1311) has reached a predetermined rotational state based on the detected value, and a relationship between a pressure command and the rotor angle position of the electric motor (1311) is corrected based on the current value information of the electric motor (1311).

FIG. 1

EP 1 892 164 A2

**Description**

BACKGROUND OF THE INVENTION

The present invention relates to an electric braking apparatus in which electric machinery, such as an electric motor, presses a brake friction member against a brake rotor to generate a braking force, and relates to a method thereof.

The electric braking apparatus generates a rotational torque of the electric motor such that a braking force is generated in response to a brake pedal pressing force (referred to as a pedal depression force hereinafter) which is converted into an electrical signal. A method of controlling the braking force in the electric braking apparatus includes a technique that detects a position where the brake friction member starts contacting the brake rotor based on a change in the values detected by an axial force sensor, which is attached to a piston for pressing or separating the brake friction member, and controls the braking force based on the displacement amount in rotational angle of a motor rotor from a detected contact start position.

In a case that a pressure force is estimated without using the above axial force, a relationship between a pressure force command value and a motor rotor position angle command value varies due to a change in caliper rigidity caused by a change in temperature or the abrasion of a brake pad. Therefore, in an electric braking apparatus described in an international patent application publication No. WO 01/45245, the relationship between the pressure force command value and the motor rotor position angle command value is corrected according to the amount of current applied to the motor or wheel deceleration which is obtained from wheel velocity.

SUMMARY OF THE INVENTION

However, in the above patent application publication No. WO 01/45245, the relationship between the pressure force command value and the motor rotor position angle command value is corrected only according to the amount of the current applied to the motor and wheel deceleration obtained from wheel velocity. Therefore, the correction precision could deteriorate due to the effect of a viscosity resistance and a moment of inertia, which are related to the motor, a reduction gear and a mechanism for converting rotational motions into linear motions. As a result, the precision of controlling the braking force could be degraded.

Assuming that a motor rotor position angle is X, and a pressure factor for pressing a brake pad against a brake rotor is F (X), an equation of motion (1) can be expressed as follows:

$$J \cdot \frac{d^2}{dt^2}X + D \cdot \frac{d}{dt}X + P \cdot F(X) = K \cdot Iq \qquad (1)$$

where, J is a moment of inertia, D is a viscosity coefficient, p is a torque amplification factor when the electric motor is viewed from the brake pads, Iq is a torque current component of the motor, and K is a torque constant of the motor.

When the relationship between the pressure force command value and motor rotor position angle command value is corrected only according to the amount of the current applied to the motor based on above expression (1), the correction can be affected by the term of the moment of inertia and the term of viscosity coefficient. Therefore, the correction precision may be degraded.

Therefore, it is an object of the present invention to improve the control precision of the electric braking apparatus even if environment changes under which the electric brake is used.

The present invention provides an electric braking apparatus equipped with a conversion mechanism for generating a force for pressing or separating a brake friction member based on a rotational torque generated by an electric motor. In the electric braking apparatus, the rotational state of the electric motor as well as a braking process in which the brake friction member is pressed or separated, are detected from the rotational information of a rotational state obtaining unit. Based on the detected value, it is sensed that the electric motor has reached a predetermined rotational state. Furthermore, the relationship between a pressure force command and an electric motor rotor position angle command is corrected based on current value information of the electric motor.

The present invention also provides a method of controlling the electric braking apparatus equipped with the conversion mechanism for generating a force for pressing or separating the brake friction member based on a rotational torque generated by the electric motor. In the method of controlling the electric braking apparatus, the rotational state of an electric motor as well as a braking process in which the brake friction member is pressed or separated are detected from the rotational information of the rotational state obtaining unit. Based on the detected value, it is sensed that the electric braking apparatus has reached a predetermined rotational state. Furthermore, the relationship between the pressure force command and the electric motor rotor position angle command is corrected based on the current value information of the electric motor.

The present invention enables the control of the electric braking apparatus with a high degree of precision even if environment changes under which the electric braking apparatus is employed.

Other objects, features and advantages of the invention will become apparent from the following description of the embodiments of the invention taken in conjunction with the accompanying drawings.

The above features may be combined partly or as a whole in any way.

BRIEF DESCRIPTION OF THE DRAWINGS

Fig. 1 is a block diagram of a control block of an electric braking apparatus in a central processing unit according to an embodiment of the present invention;

Fig. 2 is a schematic diagram of electric braking devices of an electric braking apparatus of a vehicle according to an embodiment of the present invention;

Fig. 3 is a schematic diagram of the electric braking devices of Fig. 2;

Fig. 4 is a conceptual diagram of one of the electric braking devices of Fig. 2;

Fig. 5 is a cross-sectional view of a specific internal structure of one of the electric braking devices of Fig. 2;

Fig. 6 is circuit configuration diagram of one of the electric braking devices of Fig. 2;

Fig. 7 is a graph showing a relationship between a pressure force command Fcom and a motor rotor position angle command Xcom;

Figs. 8A and 8B are graphs showing changes in rigidity of the electric braking devices due to various factors;

Fig. 9 is a block diagram of a control block in a correction processing unit of Fig. 1;

Fig. 10 is an explanatory diagram showing time-series variations in a motor rotor position angle, a motor rotor velocity, a motor rotor acceleration, and a torque current component value when the brake friction member is pressed;

Fig. 11 is a graph showing a relation between a torque current component Iq and an estimated pressure force Fest;

Fig. 12 is an explanatory diagram showing time-series variations in an electric motor rotor position angle, an electric motor rotor velocity, an electric motor rotor acceleration, and a torque current component value when the brake friction member is separated;

Fig. 13 is a graph showing the relationship between the motor rotor position angle Xact and estimated pressure force value that is derived from correction computation;

Fig. 14 is a block diagram of a control block of an electric braking apparatus in the central processing unit according to an embodiment of the present invention.

Fig. 15 is a block diagram of a control block in a correction means selection block shown in Fig. 14;

Fig. 16 is a flowchart for determining a change in the pressure force command value; and

Fig. 17 is a flowchart for determining a decrease in the pressure force command value and a parking brake release command.

DESCRIPTION OF THE EMBODIMENTS

Embodiments of the electric braking apparatus according to the present invention will be described with reference to appended drawings.

(Embodiment 1)

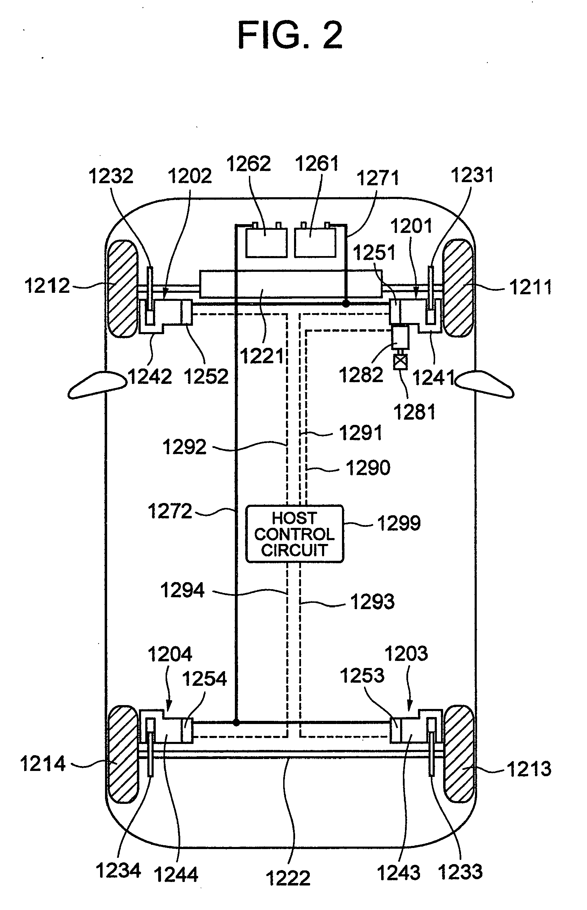

Fig. 2 is a schematic diagram of a braking system of a vehicle having electric braking devices of an electric braking apparatus according to an embodiment of the present invention. Illustration and description of a drive mechanism for traveling, which is not directly related to the present invention, are omitted here.

A first electric braking device 1201 is mounted at a location near a right front wheel 1211 and an axle 1221, while a second electric braking device 1202 is mounted at a location near a left front wheel 1212 and the axle 1221. Moreover, a third electric braking device 1203 is mounted at a location near a right rear wheel 1213 and an axle 1222, while a fourth electric braking device 1204 is mounted at a location near a left rear wheel 1214 and the axle 1222.

The first electric braking device 1201 and second electric braking device 1202 have the same structure, while the third electric braking device 1203 and fourth electric braking device 1204 have the same structure. While the basic structure of the electric braking devices 1201 to 1204 is the same, it is preferable that the first and second electric braking device 1201 and 1202 generate a larger braking force than the third and fourth electric braking device 1203 and 1204.

Brake rotors 1231 and 1232 are fixed to the axle 1221 of the front wheels, while brake rotors 1233 and 1234 are fixed to the axle 1222 of the rear wheels. Mechanical units 1241 to 1244 of the electric braking devices are each provided with a pair of brake pads which constitutes a as brake friction member, which oppose both surfaces of the brake rotors 1231 to 1234. The brake pads are not shown in Fig. 2. Each pair of the brake pads are pressed against each of the brake rotors 1231 to 1234 to sandwich each of the brake rotors based on the rotational torque of the electric motor, thus generating braking forces.

Each of the electric braking devices 1201 to 1204 is a one-piece construction in which each of electric circuit units 1251 to 1254 that control the current for driving each electric motor is fixed to each of the mechanical units 1241 to 1244. Specifically, the electric circuit units 1251 to 1254 are attached to the surfaces of the mechanical units 1241 to 1244 surfaces opposite to the brake pads in the axle direction.

Power is supplied to the first electric braking device 1201 and second electric braking device 1202 of the front wheel from a first battery 1261 via a first power source line 1271, and power is also supplied to the third electric braking device 1203 and fourth electric braking device 1204 of the rear wheel from a second battery 1262 via a second power source line 1272. Alternatively, power may be supplied to the first electric braking device 1201 of the right front wheel and fourth electric braking device 1204 of the left rear wheel from the first battery 1261, and power may be supplied to the second electric braking device 1202 of the left front wheel and third electric braking device 1203 of the right rear wheel. Since two types of power source lines are provided, even if one of them experiences a failure, the other one can apply brake, thus improving safety. It should be noted that while two batteries 1261 and 1262 supply power to the electric braking devices 1201 to 1204 in the above, the number of batteries is not limited to two. The number of batteries may be one or may be plural. However, a plurality of batteries would more enhance safety.

An electric braking apparatus described below is provided with a brake pedal 1281. The pedal stroke or pedal depression force of the brake pedal 1281 is detected by a pedal depression amount detector 1282. An output from the pedal operation amount detector 1282 that corresponds to the pedal stroke or pedal depression force is inputted into a control circuit 1299 via a multiplex communication line 1290. The control circuit 1299, which serves as the electric braking apparatus, performs higher level control processing to the electric circuit units of electric brakes (the control circuit 1299 is referred to as an "host control circuit" hereinafter).

The host control circuit 1299 is disposed in, for example, a vehicle cabin, and receives information on the state of the first to fourth electric braking devices 1201 to 1204 from the first to fourth braking devices 1201 to 1204 via the multiplex communication lines 1291 to 1294, respectively. The information on the state of the first to fourth electric braking devices 1201 to 1204 includes: an estimated value of a pressure force; information on a current operational mode value; information from various sensors for detecting vehicle motions, a parking brake switch and the like, which will be described below; and the like. In this manner, while the state of the electric braking apparatus is monitored, an appropriate control signal is transmitted to the first to fourth electric braking devices 1201 to 1204 via the multiplex communication lines 1291 to 1294 in response to the operation amount of the brake pedal 1281, and these first to fourth braking devices 1201 to 1204 are properly operated. Furthermore, the host control circuit 1299 performs other controls including fail-safe and the like.

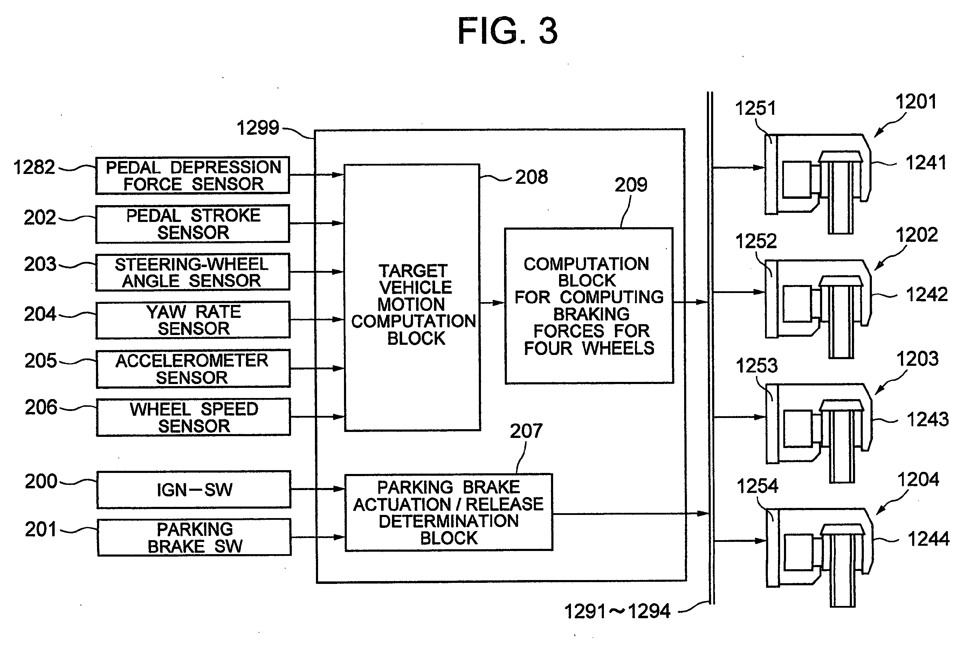

Fig. 3 is a schematic block diagram of the electric braking apparatus.

A target vehicle motion computation block 208 of the host control circuit 1299 detects the amount of operation of the brake pedal and steering wheel performed by a driver of the vehicle based on information from the foregoing pedal depression force detector 1282, a pedal stroke sensor 202, and a steering angle sensor 203 provided on the steering wheel. Moreover, the vehicle motion is detected based on the information from a yaw rate sensor 204 provided on the vehicle body, a longitudinal G (gravity) sensor (accelerometer) 205, and wheel speed sensors 206 provided on each wheel. Then, a target deceleration and a target yaw rate based on the amount of operation by the driver and vehicle motion are computed.

A computation block 209 computes individual control values of brake pressure force for each of front and rear and left and right wheels based on the target deceleration and target yaw rate of the vehicle motion to output a pressure force commands to electric circuits 1251, 1252, 1253 and 1254 of each wheel via the multiplex communication lines 1291 to 1294.

On the other hand, if it detects that the driver operates a parking brake switch 201, a determination block 207 for determining whether the parking brake is operated or released outputs a command to actuate or release the parking brake to control units of the electric braking devices provided with parking brake mechanism, which will be discussed later, via the multiplex communication lines 1291 to 1294. If it detects that the ignition switch 200 was turned off, the determination block 207 for determining whether the parking brake is operated or released also outputs a command to actuate the parking brake to control units of the electric braking devices via the multiplex communication lines 1291 to 1294 before the electric braking apparatus is powered off, and then powers off the electric braking apparatus and electric circuits 1251 to 1254 of each wheel after sensing that the actuation of each parking brake mechanism has been completed.

It should be noted that while the electric braking apparatus is powered off according to the detection of the information on the turning off of the ignition switch in the present embodiment, the electric braking apparatus may be powered off according to the detection of information from a door switch, a key-less entry system or a seat pressure sensor.

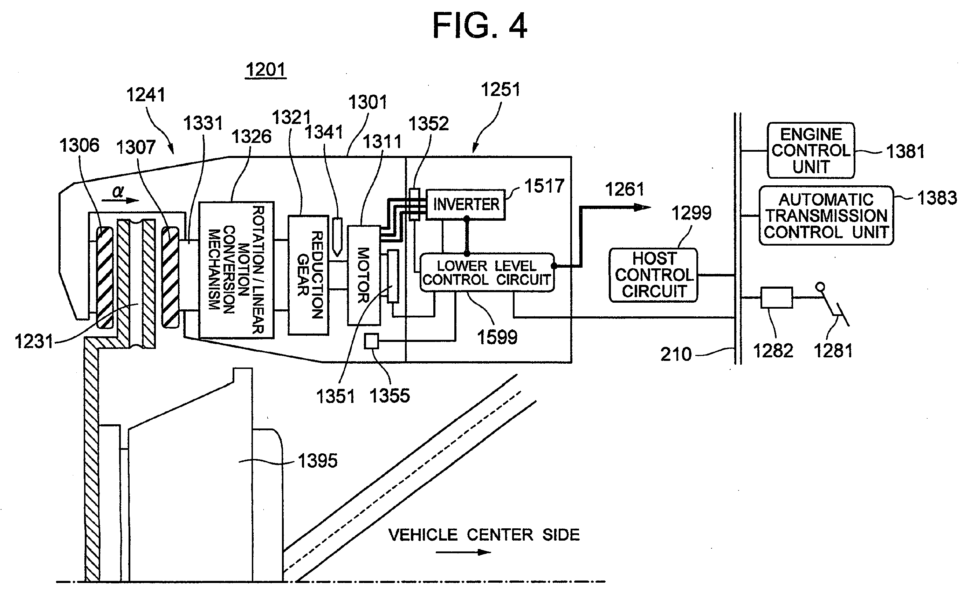

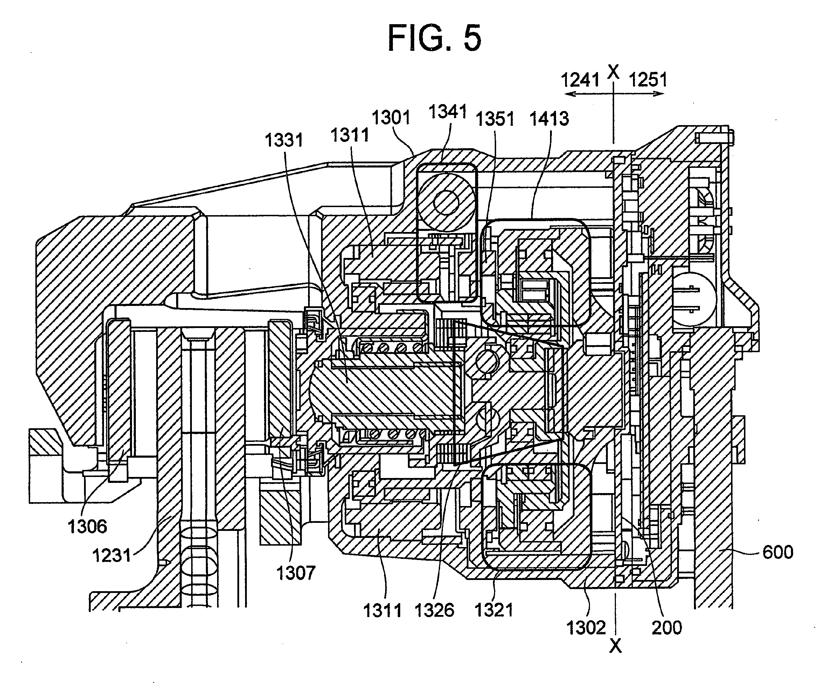

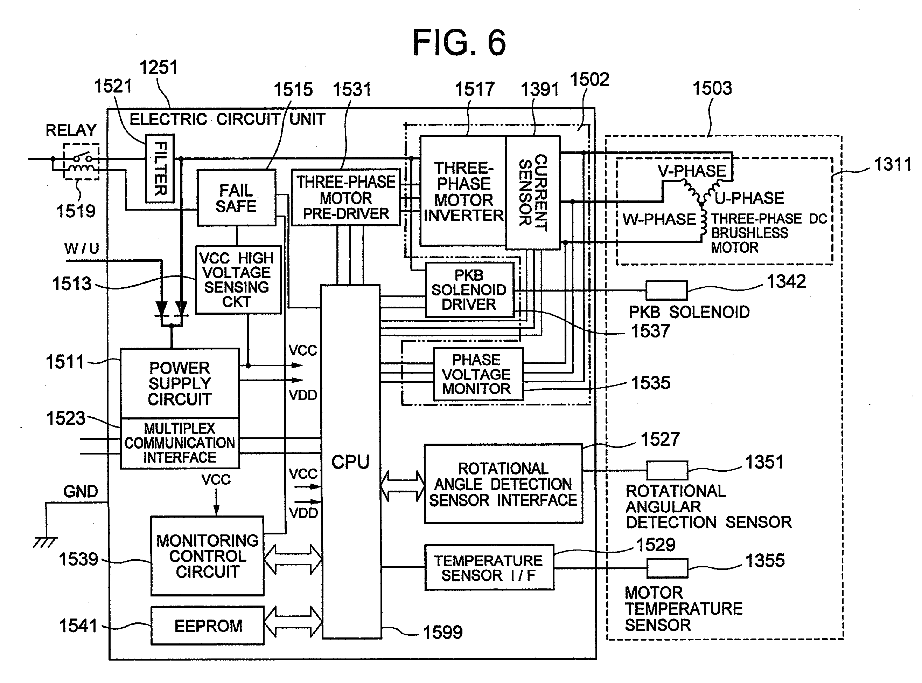

Fig. 4 is a conceptual diagram of one of the braking devices shown in Fig. 2. Here, the first electric braking device 1201 will be described as a representative of such electric braking devices. This is true of Figs. 5 and 6.

The electric braking device 1201 comprises a pair of brake friction bodies 1306 and 1307 which are disposed to face each other. Part of the periphery of a brake rotor 1231, which is attached to the axle and rotates with the rotation of the axle, is supported by a vehicle body such that it is disposed between the brake pads 1306 and 1307 of the brake friction member.

The electric braking device 1201 is constituted of a one-piece construction comprising a mechanical unit 1241 and an electric circuit unit 1251. The mechanical unit 1241 and electric circuit unit 1251 are separated by region. This also enables the structural separation between the mechanical unit 1241 and electric circuit unit 1251.

The mechanical unit 1241 of the electric braking device 1201 comprises, for example, an electric motor 1311 as a three-phase motor; a reduction gear 1321 for decelerating the rotation of the electric motor 1311; and a rotational/ linear motion converter mechanism 1326 for converting the rotational motion of the electric motor 1311, which is decelerated by the reduction gear 1321, into a linear motion to advance and retract a piston 1331, which are all housed in a housing 1301.

The brake pad 1307 is attached to the piston 1331. The brake friction member 1307 is pressed against the brake rotor 1231 from one side through the pressure force of the piston 1331. In this event, a caliper moves in the direction of arrow $\alpha$ in Fig. 4 with the pressure force as a reaction force, and another brake pad 1306 is pressed against the brake rotor 1231 from the other surface side.

Furthermore, a parking brake (PKB) mechanism 1341 is provided at the connection portion between the electric motor 1311 and the reduction gear 1321, and it is possible to stop the rotation of the electric motor 1311 while a pressure force is applied to the piston 1331 without energizing the electric motor 1311.

Moreover, a rotational angle detection sensor 1351 for detecting the rotor angle position of the electric motor 1311, a current sensor 1352 for detecting the current applied to the electric motor, and a motor temperature sensor 1355 for detecting the temperature of the electric motor 1311 are provided in the vicinity of the electric motor 1311. The output signals of the rotational angle detection sensor 1351, current sensor 1352, and motor temperature sensor 1355 are inputted into a lower control circuit 1399 which is disposed in the electric circuit unit 1251.

Power is supplied to the electric circuit unit 1251 of the electric braking device 1201 from a battery 1261 disposed outside the electric braking device 1201. Control signals such as pressure force commands are also supplied to the electric circuit unit 1251 via a multiplex communication route 210 which is connected to an engine control unit 1381, an automatic transmission control unit 1383, a pedal operating amount detector 1282 for detecting the depression force of the brake pedal 1281 and the like, or from the complex communication route 210 via the host control circuit 1299.

The electric circuit unit 1251 is provided with the lower level control unit 1599 and an inverter circuit 1391. The inverter circuit 1391 is a circuit for controlling voltage to be applied to the electric motor 1311 or the like. Control signals, such as power and pressure force commands, are inputted into the lower control circuit 1399. The lower control circuit 1399 is adapted to control the inverter circuit 1391 based on the output information from the rotational angle sensor 1351, current sensor 1352, motor temperature sensor 1355 and the like. Then, the outputs from the inverter circuit 1391 are inputted into the electric motor 1311. This drives the electric motor 1311 to cause the piston 1331 to generate a predetermined pressure force. It should be noted that a reference character 1395 in Fig. 4 indicates a structure on the vehicle side.

Fig. 5 is a cross-sectional diagram of a specific internal structure of the electric braking device of Fig. 2.

In Fig. 5, the boundary of the mechanical unit 1241 and the electric circuit unit 1251 of the electric braking device of Fig. 2 corresponds to a line segment X-X in Fig. 4. In Fig. 5, left side of the line segment X-X indicates the mechanical unit 1241, while right side indicates the electric circuit unit 1251.

The parking brake mechanism 1341 shown in Fig. 4 is equal to a structure shown in a thick line frame 1341. The reduction gear 1321 shown in Fig. 4 is equal to a structure in a thick line frame 1321. The rotational/linear motion converter mechanism 1326 shown in Fig. 4 is equal to the structure in a thick line frame 1326.

The electric motor 1311 is structured as, for example, a brushless three-phase motor that comprises a stator fixed to a housing 1301 that includes a carrier, and a rotor disposed at an inner side of the stator. The electric motor 1311 actuates the rotor to rotate by a desired angle with a desired torque according to a command from the lower control unit 1399, and the rotor angle position is detected by the rotational angle sensor 1351.

The reduction gear 1321 reduce the rotation speed of the output of electric motor 1311 as described above, thereby increasing the torque of the electric motor 1311. This enables the use of a small-sized electric motor 1311.

The major part of constituent members of such mechanical unit 1241 as well as the housing 1301 is constituted of a metal, thus being configured to have excellent heat transfer efficiency. Accordingly, heat from the brake friction member (brake pads 1306, 1307 and periphery thereof) as a heat source is more likely be transferred to the peripheral mechanical unit 1241 and then dissipated via the outward housing of the mechanical unit.

In this case, since the electric circuit unit 1251 is formed on a surface opposite to, for example, the pad portion across the mechanical unit 1241, configuration is made such that heat to be transferred to the electric circuit unit 1251 is minimized. In addition, a clearance (space) as described above is formed between the mechanical unit 1241 and electric circuit unit 1251. This clearance (space) allows the transfer of heat from the mechanical unit 1241 to the electric circuit unit 1251 to be reduced even more.

Furthermore, since the housing 1301 of the electric braking device 1201 is made of a metal, the housing 1301 is adapted to protect against external injuries and to provide a shield effect against electromagnetic waves.

Fig. 6 is a circuit configuration diagram of the electric braking device of Fig. 2.

Circuits of the electric circuit unit 1251 are shown by a thick line frame 1251 in Fig. 6. Of them, a circuit encircled by an alternate long and short dash line frame 1502 is an inverter circuit 1517, with the remainder being a lower control circuit 1399. Circuits of the mechanical unit 1241 are shown by a dotted line frame 1503.

In the electric circuit unit 1251 encircled by the thick line frame 1251, power that is supplied via a power supply line within a vehicle is inputted into a power supply circuit 1511. Stable power (VCC, VDD) provided by the power supply circuit 1511 is supplied to a central processing unit (CPU) 1599 or other units.

The power (VCC) from the power supply circuit 1511 is monitored by a VCC high voltage sensing circuit 1513, and if the voltage of VCC is sensed to be higher than a predetermined voltage level, then a fail safe circuit 1515 goes into action.

The fail safe circuit 1515 actuates a relay for switching the power that is supplied to a three-phase motor inverter circuit 1517 as described later, and if a high voltage is sensed by the VCC high voltage sensing circuit 1513, then the power supply to the electric braking apparatus is turned into an OFF state.

The power to be supplied into the electric circuit unit 1251 via the relay 1519 passes through a filter circuit 1521, where noise thereof is eliminated, and is thereafter supplied to the three-phase motor inverter circuit 1517 and power supply circuit 1511.

A control signal from the host control circuit 1299 is inputted into the central processing unit 1599 via a multiplex communication interface circuit 1523. Outputs from a rotational angle sensor 1351 and a motor temperature sensor 1355 disposed in the mechanical unit 1241 are also inputted into the central processing unit 1599 via a rotational angle sensor interface circuit 1527 and a motor temperature sensor interface circuit 1529, respectively. This is for the purpose of ensuring that an appropriate pressure force is provided to the electric motor 1311 by performing feedback control based on a control signal from the host control circuit 1299.

Specifically, the central processing unit 1599 controls a three-phase motor pre-driver circuit 1531 such that it outputs a voltage corresponding to the control signal to a three-phase pre-driver circuit 1531 based on the control signal from the host control circuit 1299 and value detected by each sensor. The three-phase motor inverter circuit 1517 is provided with a current sensor 1391 and a phase voltage monitor circuit 1535. The central processing unit 1599 monitors the phase current and phase voltage of the three-phase motor inverter 1517 through the current sensor 1391 and phase voltage monitor 1535, thereby to activate the three-phase motor pre-driver circuit 1531 properly. The three-phase motor inverter circuit 1517 is connected to the electric motor 1311 in the mechanical unit 1241, and drives the electric motor 1311 in response to a command from the central processing unit 1599.

The central processing unit 1599 also controls a PKB (parking brake) solenoid driver circuit 1537 based on the control signal from the host control circuit 1299 and values detected by each sensor to actuate a PKB solenoid 1372 in the mechanical unit 1241 and thereby actuate the parking brake. It should be noted that the same power as that supplied to the three-phase motor inverter circuit 1517 is supplied to the PKB solenoid driver circuit 1537.

Furthermore, the electric circuit unit 1251 is provided with a monitoring control circuit 1539 for transmitting and receiving signals to and from the central processing unit 1599, and a storage circuit 1541 comprised of an EEPROM in which failure information or the like is stored. The central processing unit 1599 drives the electric motor 1311 such that an appropriate braking force is obtained based on the information from the monitoring control circuit 1539 and storage circuit 1541.

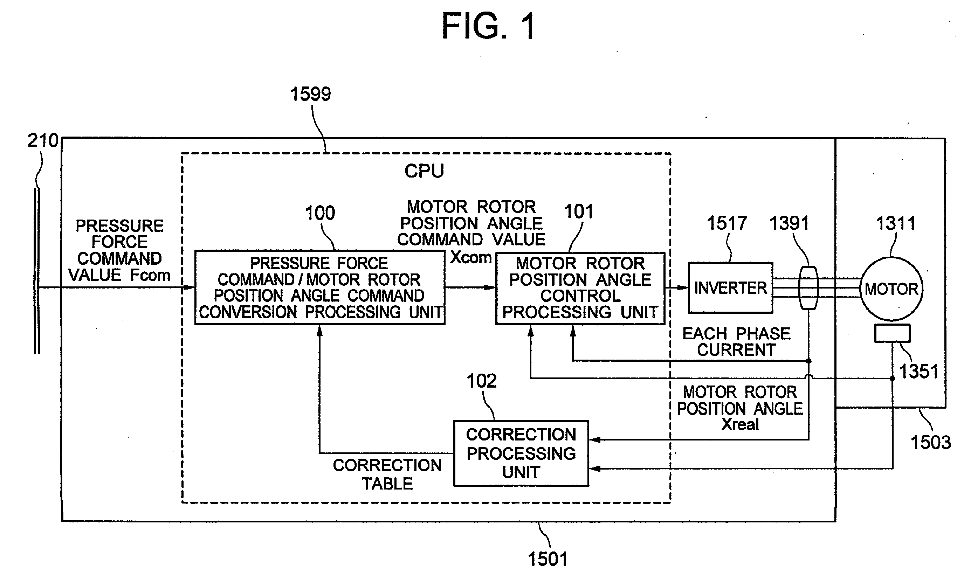

Fig. 1 is a control block diagram of an electric brake control performed in the central processing unit 1599. Electric brake control processing comprises a pressure force command/motor rotor position angle command conversion processing unit 100, a motor rotor position angle control processing unit 101, and a correction processing unit 102.

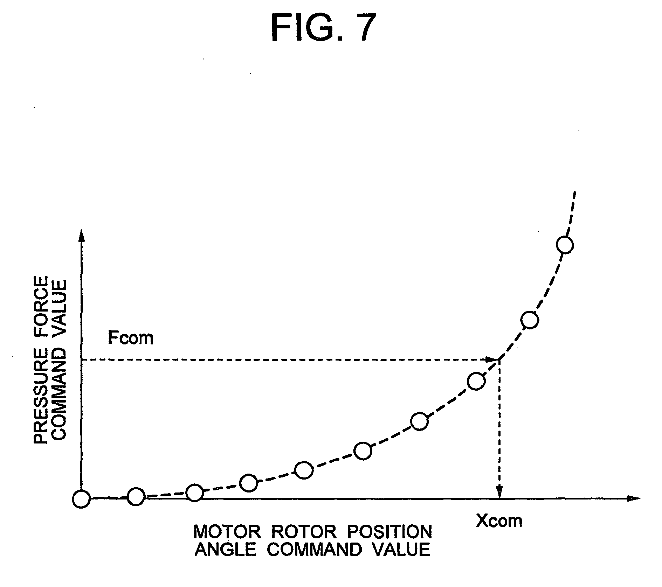

The pressure force command/motor rotor position angle command conversion processing unit 100 converts a pressure force command Fcom received from the host control circuit 1299 into a motor rotor position angle command Xcom relating to the rotational position of the electric motor 1311. In the present embodiment, as Fig. 7 shows, the discrete relationship between the pressure force command Fcom and motor rotor position angle command Xcom is stored in a storage device as a table, and the motor rotor position angle command Xcom is derived from the given pressure force command Fcom using linear complementation. The table is referred to as a pressure force command Fcom/motor rotor position angle command Xcom conversion table hereinafter. In addition to the present embodiment, a motor rotor position angle command Xcom relative to a given pressure force command Fcom may be derived by approximating the pressure force command Fcom as a polynomial expression of the motor rotor position angle command.

The motor rotor position angle control processing unit 101 controls the current for energizing the electric motor 1311 by obtaining the motor rotor position angle command Xcom outputted by the pressure force command/motor rotor position angle command conversion processing unit 100, feeding back the values of the current sensor 1391 and rotational angle sensor 1351, and operating the voltage outputted by the inverter 1517 such that the motor rotor position angle Xact follows the motor rotor position angle command Xcom.

In the present embodiment, the coordinate system for a motor rotor position angle Xreal which is detected by the rotational sensor 1351 differs from that for the motor rotor position angle Xact which is used for control. The relationship between the motor rotor position angle Xact used for control and the motor rotor position angle Xreal detected by the rotational angle sensor 207 can be indicated by the following expression (2).

$$Xact = Xreal - Xo \qquad (2)$$

where Xo is a position where brake friction member starts to contact the brake rotor.

In the present embodiment, the motor rotor position angle command Xcom and the motor rotor position angle Xact are on the same coordinate system, and assuming that the motor rotor position angle command Xcom=0 and the motor rotor position angle Xact=0, the brake friction member exists on a position (contact start position Xo) where the brake friction member starts to contact the brake rotor.

The contact start position Xo is recognized as a motor rotation X when dI/dX, which is a change rate of current I for energizing the electric motor 1311 relative to the electric motor rotor position angle X, reaches a predetermined value or more after the piston 1331 is moved at a predetermined speed in the pressing direction from a state where there is a clearance between the brake friction member and brake rotor. The predetermined value of the change rate dI/dX indicates a rate of increase in current value associated with an increase in the rotational torque of the electric motor 1311 when a reaction force from the brake rotor increases after the brake friction member contacts the brake rotor. In other words, it is possible to obtain the contact start position Xo by detecting a change in the current which is required by the piston 1331 in order to minimize the clearance, as well as a change in the motor current which is required for keeping pressing the brake friction member against the brake rotor in order to maintain the state in which the brake friction member is in contact with the brake rotor.

In addition, it is also possible obtain the contact start position Xo based on the change rate dI/dX of current relative to the electric motor rotor position angle when the brake friction member starts to move away from the brake rotor after control is made such that the pressure force applied to press the brake friction member against the brake rotor is released at a constant speed.

However, the contact start position Xo changes from hour to hour according to a change in temperature caused by a friction heat between the brake friction bodies and brake rotor, and according to a change in rigidity of the electric brake caused by a change in friction state of the brake friction member. Moreover, in a pressure force command Fcom/ motor rotor angle versus position command Xcom conversion table obtained from a characteristic graph shown in Fig. 7, the relationship between the pressure force command Fcom and motor rotor position angle command Xcom changes due to the same reasons.

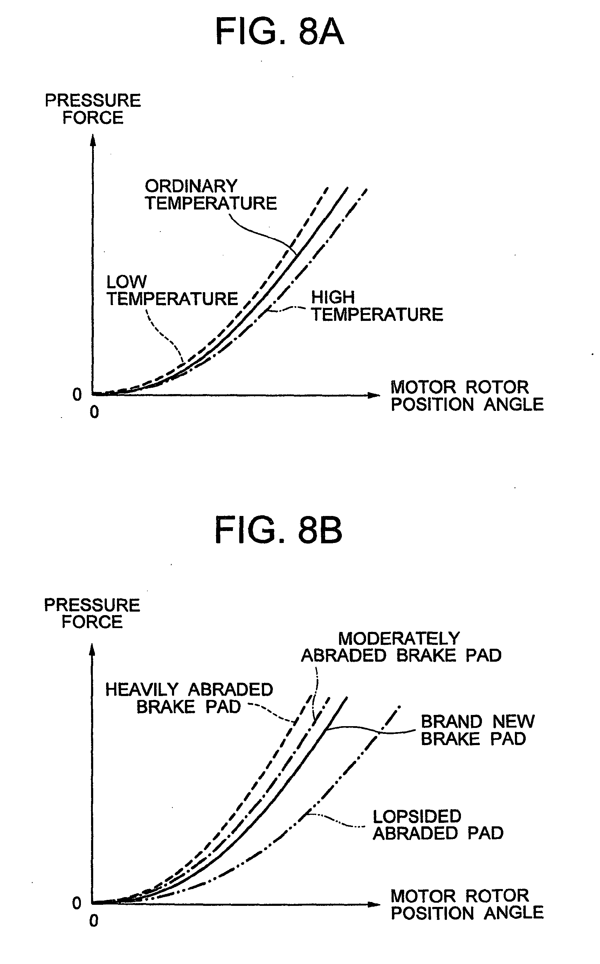

Fig 8A shows a relationship between the motor rotor position angle and pressure force at each temperature of the outer surface of the electric brake. Fig. 8B shows the relationship between the motor rotor position angle and pressure force at each level of abrasion of the brake pads of the electric brake. Since the rigidity of the electric brake changes due to these factors, the relationship between the pressure force command Fcom and motor rotor position angle command Xcom needs to be properly corrected.

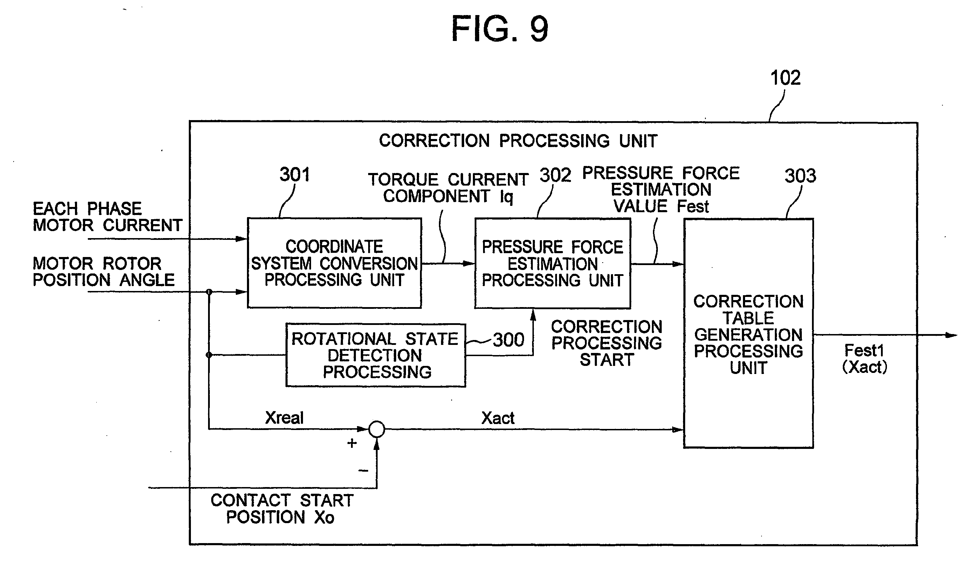

Fig. 9 shows an embodiment of a correction processing unit 102.

A rotational state detection processing unit 300 detects the rotational state of the electric motor 1311, such as a rotor angle position, a rotor velocity, and a rotor acceleration of the electric motor 1311 when the brake friction member is pressed against the brake rotor based on the motor rotor position angle which is inputted at a predetermined interval of time.

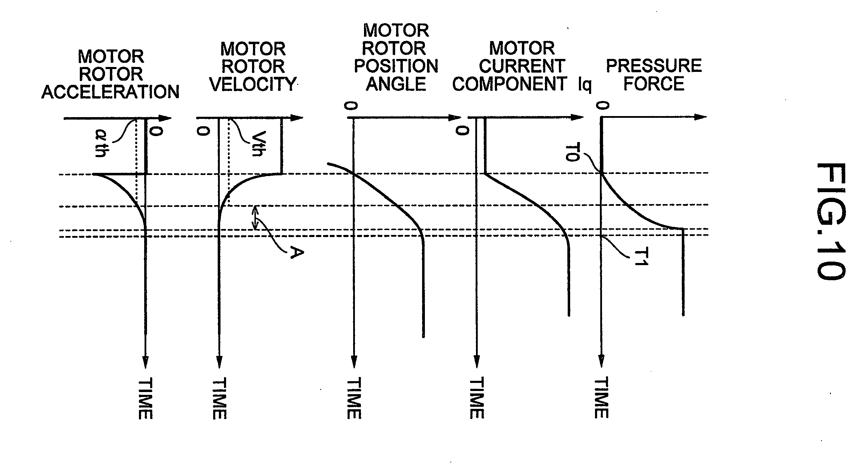

Fig. 10 shows time series variations in the motor rotor position angle, motor rotor velocity, motor rotor acceleration, and motor rotor current which are detected by the rotational state detection processing unit 300 and current sensor 1391 when the brake friction member is pressed.

If the rotational state detection processing unit 300 detects that any one or both of the motor rotor velocity and motor rotor acceleration has or have become smaller than predetermined values Vth and αth, the rotational state detection processing unit 300 outputs a signal for starting the processing of the pressure force command Fcom/motor rotor position angle command Xcom correction. Here, the predetermined value Vth shown in Fig. 10 refers to the motor rotor velocity in which the viscosity resistance of the electric motor 1311, reduction gear 1321, and rotational/linear motion converter mechanism 1326 becomes extremely small. The predetermined value αth shown in Fig. 10 refers to the motor rotor acceleration in which the moment of inertia of the electric motor 1311, reduction gear 1321, and rotational/ linear motion converter mechanism 1326 becomes extremely small.

A coordinate system conversion processing unit 301 separates the motor current into a torque current component Iq and a field current component Id based on the values detected by the current sensor 1391 and rotational angle sensor 1351. Here, the torque current component Iq refers to a current that becomes a rotational torque generated by the electric motor 1311 as a result of multiplication by the torque constant.

When a pressure force estimation processing unit 302 obtains a correction processing start signal from the rotational state detection processing unit 300, the pressure force estimation processing unit 302 estimates the pressure force for pressing the brake friction member against the brake rotor based on the torque current component Iq obtained by the coordinate system conversion processing unit 301.

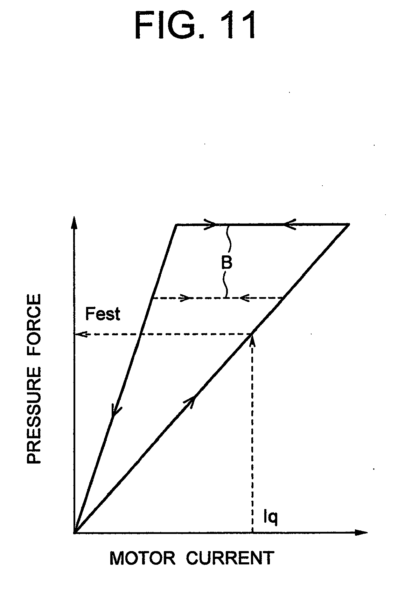

In the present embodiment, a table that shows the relationship between the torque current component Iq and an estimated pressure force Fest obtained from a characteristic graph shown in Fig. 11 is stored in a storage device (not shown), and the estimated pressure force Fest is derived from the torque current component Iq which is derived by the coordinate system conversion processing unit 310 using a linear complementation.
The table is referred to as a torque current component Iq/estimated pressure force Fest conversion table hereinafter.

A hysteresis, as shown by B in Fig. 11, is provided in the torque current component Iq/estimated pressure force Fest conversion table. It should be noted that this is because consideration is given to the effect of backlash of the reduction gear 1321 and rotational/linear motion converter 1326, and to the fact that there is a difference between correct efficiency of rotation and opposite efficiency of rotation.

The rotational torque generated by the electric motor 1311 is converted into a force for pressing the brake friction member (brake pads 1306 and 1307) against the brake rotor 1231 via the reduction gear 1321, rotational/linear motion converter 1326, and piston 1331 which are previously designed. Therefore, it is possible to estimate the pressure force based on the torque current component Iq from the relationship between the torque current component Iq and rotational torque.

A correction table generation processing unit 303 previously stores the same table as the pressure force command Fcom/motor rotor position angle command Xcom conversion table as shown in Fig. 7, which is used by the pressure force command/motor rotor position angle command conversion processing unit 100. Then, the table is sequentially corrected every time the relationship Fest (Xact) between the Xact and the estimated pressure force Fest is derived based on.the estimated pressure force Fest, which is estimated by the pressure force estimation processing unit 302, and the motor rotor position angle Xact. Here, the corrected pressure force command Fcom/motor rotor position angle command Xcom conversion table is assumed to be Fest1 (Xact).

Then the corrected pressure force command Fcom/motor rotor position angle command Xcom conversion table is transmitted to the pressure force command/motor rotor position angle command conversion processing unit 100, where the pressure force command Fcom/motor rotor position angle command Xcom conversion table is corrected.

Additionally, the rotational state detection processing unit 300 may also detect the rotational state of the electric motor in the following manner instead. During the time period until the brake friction member is pressed against the brake rotor by the drive of the electric motor 1311, the electric motor 1311 is driven at a certain revolution speed. The contact start position where the brake friction member starts to contact brake rotor is previously detected based on a change rate of the current value that is obtained by the current sensor 1352 when the brake friction member contacts the brake rotor. With the detection of the contact start position as a trigger, the rotational state detection processing unit 300 performs the detection of the rotational state of the electric motor. This allows the correction processing to be performed at an appropriate timing, resulting in an ability to effectively use a limited memory capacity as well as CPU processing speed.

Effects of the present embodiment will be described in the following.

In the present embodiment, the pressure force command Fcom/motor rotor position angle command Xcom conversion table is corrected using the torque current component Iq/estimated pressure force Fest conversion table obtained from the graph shown in Fig. 11, which is established when the rotational operation of the electric motor 1311 is quasistatic (i.e., both motor rotor rotational velocity and motor rotor rotational acceleration of the electric motor 1311 are approximately 0). Therefore, it is possible to prevent the moment of inertia as well as the viscosity resistance of the rotor in the electric braking apparatus from having an effect on the estimated pressure force Fest during correction, thus resulting in an ability to perform correct control of the braking force of vehicle.

More specifically, assuming that the rotor angle position of the electric motor is X and the pressure force of the brake friction member against the brake rotor is Y, then an equation of motion (3) can be expressed as follows:

$$J \cdot \frac{d^2}{dt^2}X + D \cdot \frac{d}{dt}X + P \cdot F(X) = K \cdot Iq \qquad (3)$$

where, J is a moment of inertia, D is a viscosity coefficient, p is a torque amplification factor when the electric motor is viewed from the brake friction member, Iq is a torque current component relevant to a torque of the electric motor, and K is a torque constant of the electric motor.

As thus far described, in the present embodiment, the pressure force is estimated from the torque current component Iq of the electric motor if any one or both of the following is or are satisfied: the absolute value of rotation velocity dX/dt of the electric motor is a predetermined value or lower; and the absolute value of rotational acceleration of the electric motor

$$\frac{d^2X}{dt^2}$$

is a predetermined value or lower.

If the above both conditions are met, assuming that the estimated pressure force when the motor rotor position angle X is a certain value Xm, then the above expression (3) can be approximated as follows:

$$Fest(Xm) = \left(\frac{K}{P}\right) \cdot Iq \tag{4}$$

Therefore, it is possible to reduce the effects of the moment of inertia and viscosity resistance, and thereby to estimate the pressure force based on the torque current component Iq.

Furthermore, since the correction processing can be performed concurrently with pressure force control that is executed in response to the pressure force command, special processing and operations for the correction are not required, thus making it possible to control the braking force with a high degree of precision without deteriorating the function as an electric brake control apparatus.

(Embodiment 2)

An embodiment 2 differs from the embodiment 1 in that the pressure force command Fcom/motor rotor position angle command Xcom correction processing is performed during the time from when a pressure force is generated to the time when the pressure force becomes substantially 0 (separation state in which the brake friction member is completely separated from the brake rotor). It should be noted that since the embodiment 2 is the same as the embodiment 1 with the only exception that the processing content of the correction processing unit 102 of Fig. 1, which is described in the embodiment 1, is changed as will be described in subsequent sections, drawings showing the configuration of the embodiment 2 are omitted.

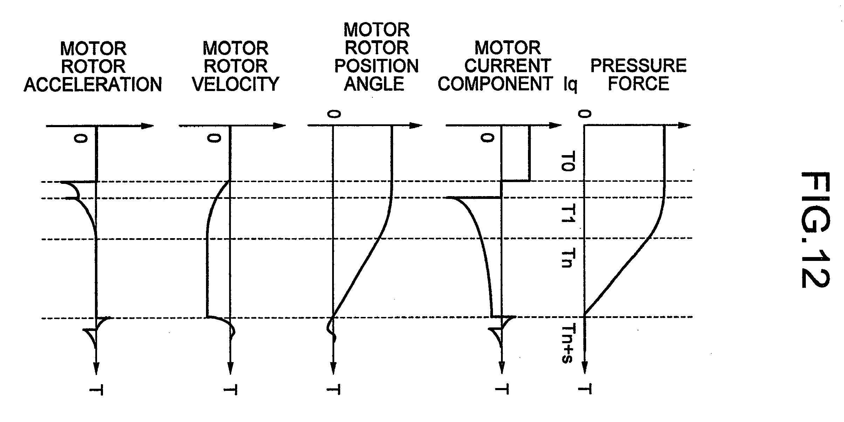

Fig. 12 shows time series variations in the motor rotor position angle, motor rotor velocity, motor rotor acceleration and motor rotor current component which are detected by the rotational state detection processing unit 300 and current sensor 1391 when the brake friction member is separated.

As Fig. 12 shows, at the instant (T0) when a state in which a pressure force is generated in response to the pressure force command value turns to a state in which a pressure force is released, the torque current component Iq is set to 0 for a given time (T0 to T1), and a pressure force F (Xreal_0) relative to an output signal Xreal_0 of the rotational angle sensor 1351 at that time is obtained.

Xreal_0 at the time T0 in Fig. 12 is the value of the output signal of the rotational angle sensor 1351 when the pressure force starts to be released in response to the pressure force command value. Assuming the torque current component Iq at this time is 0 [A], the rotational velocity is 0 [rpm]. Therefore, expression (1) is expressed as follows:

$$F(Xreal\_0) = -\left(\frac{J}{P}\right) \cdot \frac{d^2}{dt^2} Xreal \tag{5}$$

and the rotor velocity $\dfrac{d^2 Xreal}{dt^2}$ of a motor 1311 can be detected, and therefor F(Xreal_0) can be obtained.

Then, the pressure force is released (Tn~Tn+s) by controlling the electric motor 1311 such that it reaches a predetermined constant rotational velocity, and the output signal Xreal of the rotational angle sensor 1351 and torque current component Iq at that time are detected at a predetermined interval. The expression (1) is used to convert Xreal into the coordinate system of Xact, and a relationship Fest2 (Xact) between the motor rotor position angle Xact and estimated pressure force value is derived by a correction computation as described later.

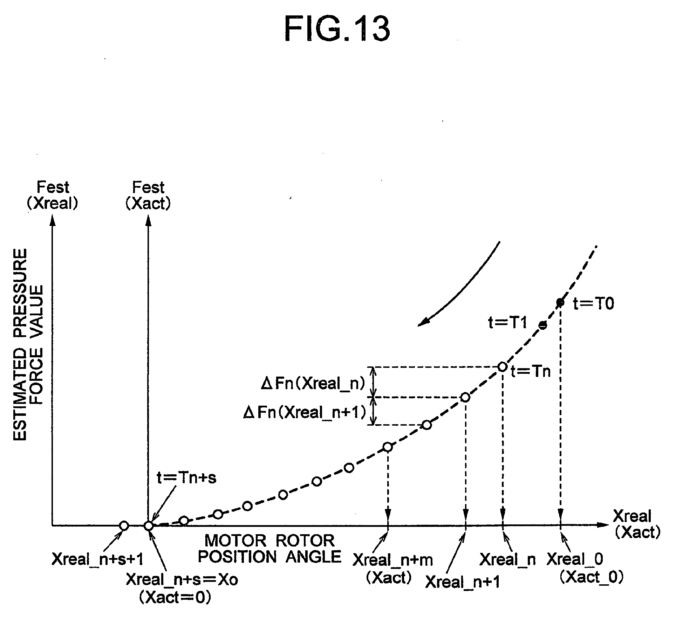

Fig. 13 shows a relationship Fest2 (Xact) between the motor rotor position angle Xact and estimated pressure force value, which is derived by the correction computation. Assuming that the output signal of the rotational sensor 1351 is Xreal_n and a torque current component is Iqn when observed at a time Tn, and the output signal of the rotational sensor 1351 is Xreal_n+1 and the motor current is Iqn+1 when observed at a time Tn+1, and when these values are substituted into the expression (1),

$$Fn(Xreal\_n) = \left( K \cdot Iq\_n - J \cdot \frac{d^2}{dt^2} Xreal - D \cdot \frac{d}{dt} Xreal \right) \Big/ P \qquad (6)$$

$$Fn+1(Xreal\_n+1) = \left( K \cdot Iq\_n+1 - J \cdot \frac{d^2}{dt^2} Xreal - D \cdot \frac{d}{dt} Xreal \right) \Big/ P \quad (7)$$

are obtained. Furthermore, a comparison between the expression (6) and expression (7) indicates that control is performed at a constant rotational velocity. Therefore, the acceleration term and velocity term can be eliminated, and a pressure force difference Δf(n) can be obtained from the following expression.

$$\Delta F(n) = Fn+1(Xreal\_n) - Fn(Xreal\_n+1) = \left( \frac{K}{P} \right) \cdot (Iq\_n - Iq\_n+1) \qquad (8)$$

Furthermore, if the motor is controlled to release the pressure force at a constant rotational velocity, the motor reaches a separation start position at a time Tn+s. The pressure force F (Xreal) continues to be 0 [N] thereafter, and Iqn+s=Iqn+s+1 is obtained from the expression (8). Therefore,

$$\Delta F(n+s) = 0 \qquad (9)$$

is obtained. In other words, the output signal Xreal_n+s of the rotational angle sensor 1351 at this time equals a separation start position Xo. Therefore, F (Xreal_n+s)=F(Xo)=0. It should be noted that this separation start position may be a contact start position of a next braking operation.

From the foregoing, when the output signal of the rotational angle sensor 1351 can be expressed as Xreal_n+m and the motor rotor position angle Xact can be expressed as Xact=Xreal_n+m-Xreal_n+s, the relationship Fest 2 (Xact) between the motor rotor position angle Xact and the estimated pressure force value can be expressed by the following expression (10).

$$Fest2(Xact) = \sum_{k=m}^{s} \Delta F(n+k) = 0 \qquad (10)$$

Finally, when the contact start position Xreal_n+s is detected, the expression (5) can be expressed by equation (11).

$$\text{Fest}(\text{Xact\_0}) \fallingdotseq \text{Fest}(\text{Xreal\_0} - \text{Xreal\_n} + s) \fallingdotseq F(\text{Xreal\_0}) \qquad (11)$$

Therefore, the Fest 2 (Xact) in a section between Xreal_n+s and Xreal_0the of the output signals of the rotational angle sensor 1351 can be derived by adding the expression (11) to the relationship Fest2 (Xact) between the motor rotor position angle Xact and estimated pressure force value which is derived by the expression (10).

Note that, as Fig. 13 shows, the foregoing method is not capable of deriving the estimated pressure force value for the motor rotor position angle having a value larger than the output signal Xreal_0 of the rotational angle sensor 1351. However, it is possible to complement Fest2 (Xact) using an inclination dF/dX at Fest2 (Xact=Xact_0) or the like.

Also note that while, in the foregoing description, the torque current component Iq is set to 0 for a given time period at the instant (T0) when a state in which a pressure force is generated in response to the pressure force command value turns to a state in which a pressure force is released, as Fig. 12 shows, the correction processing of the motor rotor position angle may be performed based on the acceleration of the electric motor that is obtained by the rotational angle sensor 1351 during the time from when the positive current, as a drive current for pressing the brake friction member against the brake rotor, flows until when a negative current, as a drive current for moving the brake friction member away from the brake rotor, flows, without setting Iq=0 for the given time period. The rotational velocity of the electric braking apparatus at T0 substantially changes depending on the performance of the electric motor, reduction gear, and the rotational/linear motion converter in the electric braking apparatus, and the performance of input processing of various sensors. Therefore, when a large rotational acceleration is detected at T0, the foregoing correction processing of the motor rotor position angle can be performed without setting the torque current component to Iq=0 during the predetermined time period, thus eliminating the necessity of special operation for the correction and making it possible to prevent the deterioration of the function as the electric brake control apparatus.

Next, the effects of the embodiment 2 will be described.

In the present embodiment 2, control is performed at a constant rotational speed in the section between Xreal_n+s and Xreal_n of the output signal of the rotational angle sensor 1351, as is shown in the process from the expression (6) to expression (7). Therefore, the acceleration term and velocity term are eliminated, and it is possible to prevent the moment of inertia as well as viscosity resistance of the rotor in the electric braking apparatus from influencing the estimated pressure force Fest2 (Xact) during the correction. As a result, it is possible to perform correct control of the braking force of the vehicle.

(Embodiment 3)

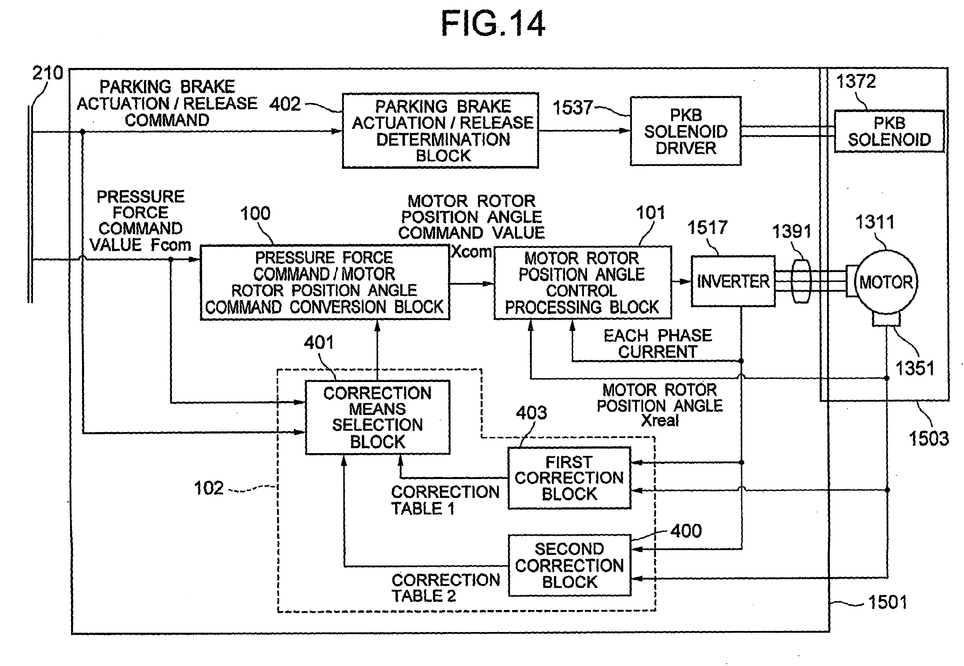

Fig. 14 shows a control block of an electric brake in the central processing unit 1599 of Fig. 6 as an embodiment of the present invention. It should be noted that like names and like reference numerals are used for the parts corresponding to those of the embodiment 1.

A first correction processing unit 403 performs the same processing as that of the pressure force command/ motor rotor position angle command conversion processing unit 100 of the embodiment 1, while a second correction processing unit 400 performs the same processing as that described in the embodiment 2.

A parking brake actuation/release determination block 402 controls a PKB solenoid driver 1537 to actuate a PKB solenoid 1372 and actuate or release a parking brake mechanism 1341 based on a parking brake actuation command or release command received from the host control circuit 1299.

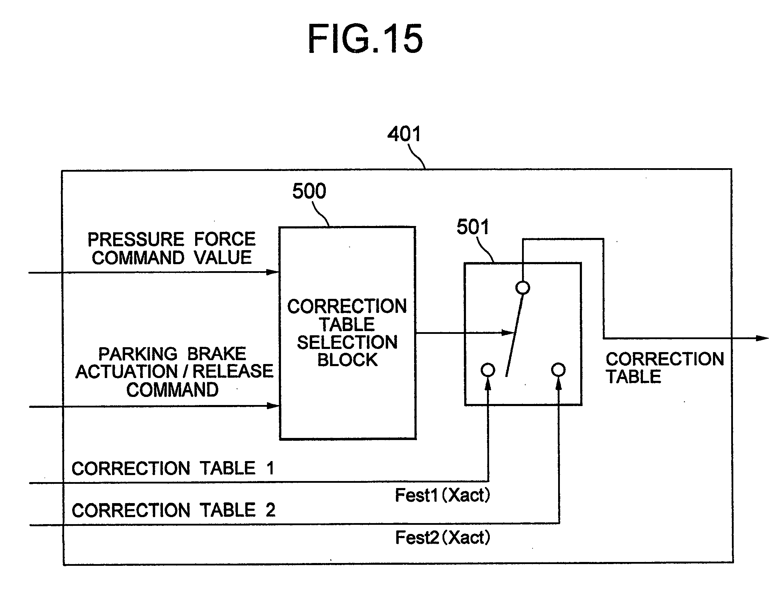

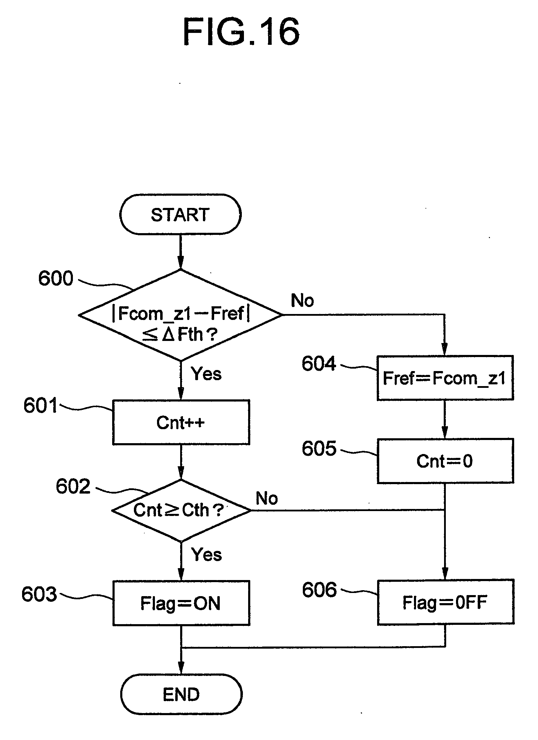

Fig. 15 shows an internal processing block of a correction means selection block 401 of Fig. 14. A correction table selection block 500 uses a flowchart for determining a change in the pressure force command value shown in Fig. 16 to determine whether pressure force command valued including a one-control-cycle previous pressure force command value were within the width of a predetermined pressure force command value range for a given time period.

First, determination is made at step 600 on whether an absolute value |Fcom_z1-Fref| as the difference between the one-control-cycle previous pressure force command value Fcom_z1 and a reference pressure force command value Fref falls within a predetermined range Δ Fth. If it does not fall within the predetermined range Δ Fth, the reference pressure force command value Fref is updated by the one-control-cycle previous pressure force command value Fcom_z1 (step 604), a counter Cnt is zero-cleared (step 605), and then the determination terminates on the assumption that conditions are not met (step 606). If it falls within the predetermined range Δ Fth at step 600, then the counter Cnt is incremented (step 601). Next, determination is made on whether the counter Cnt is greater than or equal to a predetermined value Cth (step 602). If the counter Cnt is smaller than the predetermined value Cth, then the determination terminates on the assumption that the conditions are not met (step 606). If the counter Cnt is greater than or equal to the predetermined value Cth at step 602, then the determination terminates on the assumption that the conditions are met (step 603).

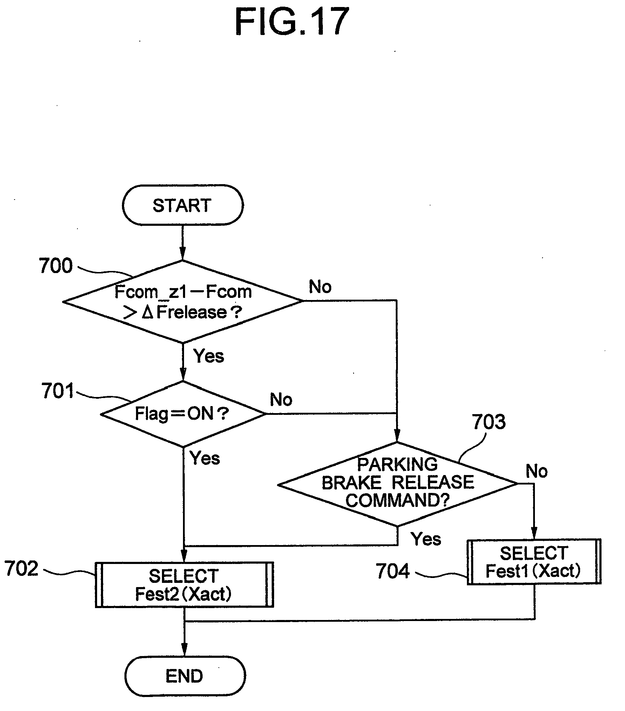

Fig. 17 is a flowchart for determining a decrease in the pressure force command value and for determining a parking brake release command. The flowchart is stored in the correction selection block 500 of Fig. 15. The flowchart determines whether the pressure force command value has decreased by a predetermined width or more or whether the command is a parking brake release command.

First, determination is made on whether a current pressure force command value Fcom has decreased by more than a predetermined width ΔFrelease when compared with a one-control-cycle previous pressure force command value Fcom_z1 (step 700). If it has not decreased by more than the predetermined width ΔFrelease, then the flow advances to the processing of step 703. If it has decreased by more than the predetermined width ΔFrelease, then determination is made at step 603 on whether a condition of Flag=ON of of Fig. 16 is met (step 701). If the condition is not met, then the flow advances to step 703. If the condition Flag=ON is met, then Fest2 (Xact) is selected and the determination terminates. Determination is made on whether the command is the parking brake release command at step 703. If it is the release command, then Fest 2 (Xact) is selected (step 702), and the determination terminates. If it is not the release command, then Fest1 (Xact) is selected (step 704) and the determination terminates.

A correction value switch and output block 501 of Fig. 15 switches the output of the correction means selection block 401 based on the determination result of the processing of Fig.17, and outputs the result to the pressure force command/motor rotor position angle command conversion processing unit 100.

Next, effects of the present embodiment 3 will be described.

In the present embodiment 3, if a command that is inputted into the electric brake control apparatus is a release command and it substantially differs from the previous pressure force command value, Fest2 (Xact) is selected at step 702. Therefore, a longer time can be obtained for controlling the electric motor to rotate at a constant speed, thereby enabling the collection of more various data for use in the correction. Additionally, even when the difference from the previous pressure force command value is small, or even when the pressure force command value little fluctuates, Fest1 (Xact) is selected at step 702. Therefore, it is possible to perform continuous corrections.

When the parking brake is actuated or a pressure force is exerted continuously for a given time Cth or longer, the relationship between the pressure force command value and motor rotor position angle command value can greatly change because of heating of the brake pad due to heat transfer from the brake rotor to the brake pad, or because of a change in temperature due to heat dissipation caused by the elapse of time. This could lead to the significant deterioration of precision of braking control afterwards if the relationship between the pressure force command value and motor rotor position angle command value can not be corrected at the time when the parking brake is released or when the parking brake is released after it has been operated continuously for a given time. However, in the present embodiment, if the command that is inputted into the electric brake control apparatus is a parking brake release command, Fest2 (Xact) is selected at step 702. Therefore, it is possible to perform the correction processing during the release of the parking brake and to perform correct control of the pressure force even immediately after the parking brake has been operated continuously for a given time.

Furthermore, in the present embodiment, power supply to the electric braking apparatus is shut off after the parking brake is actuated. Immediately after the actuation of the electric braking apparatus, which is performed by the turn-on of the ignition key by the driver, the parking brake is in an operational state. Moreover, when the vehicle starts running according to the operation of the driver, the parking brake is released. Accordingly, at that time, the relationship between the pressure force command value and motor rotor position angle command value is once corrected by the processings of steps 703 to 702 of Fig. 17. The relationship between the pressure force command value and motor rotor position angle command value can greatly change due to a change in the temperature of the brake pad during power supply interruption (during vehicle stoppage). Therefore, it is possible to correctly control the braking force from immediately after the actuation by correcting the relationship immediately after the actuation.

It should be further understood by those skilled in the art that although the foregoing description has been made on embodiments of the invention, the invention is not limited thereto and various changes and modifications may be made without departing from the spirit of the invention and the scope of the appended claims.

The above features and embodiments may be combined partly or as a whole in any way.

**Claims**

1. An electric braking apparatus, comprising:

    a braking force generating unit comprising:

brake friction member for pressing a brake rotor that rotates along with a wheel;
an electric motor generating rotational torque; and
a conversion mechanism for generating a force for pressing or separating said brake friction member against or from said brake rotor based on the rotational torque; and
a control circuit unit (1251) for controlling the rotational torque of said electric motor;

wherein said control circuit unit, comprising:

a rotational information obtaining unit(1351, i527) for obtaining rotational information of said electric motor;
a rotational position setting unit (100) for obtaining a pressure force generation command or a pressure force release command and for setting the rotational position of said electric motor in response to said pressure force generation command or pressure force release command;
an electric motor control unit (101, 1531, 1517) for controlling the rotational torque of said electric motor based on the rotational position which is set by said rotational position setting unit and rotational position of said electric motor which is obtained by said rotational information obtaining unit;
an current value information obtaining unit (1391) for obtaining information on current value supplied to said electric motor;
a pressure force estimation unit for estimating a pressure force with which said brake friction member is pressed against said brake rotor based on the current value of said electric motor obtained by said current value information obtaining unit when an absolute value of the rotational angular velocity of said electric motor obtained by said rotational information obtaining unit is a predetermined rotational angular velocity or lower; and
a correction unit (102) for estimating a pressure force with which said brake friction member is pressed against said brake rotor based on the current value of said electric motor obtained by said current value information obtaining unit, and for correcting the rotational position set by said rotational position setting unit based on the relationship between the pressure force estimated by said pressure force estimation unit and the rotational information obtained by said rotational information obtaining unit.

2. The electric braking apparatus according to claim 1, wherein
said correction unit (102) estimates the pressure force with which said brake friction member is pressed against said brake rotor based on the current value of said electric motor obtained by said current value information obtaining unit when an absolute value of the rotational angular velocity of said electric motor obtained by said rotational information obtaining unit is a predetermined rotational angular velocity of lower, and corrects the rotational position set by said rotational position setting unit based on the relationship between the pressure force estimated by said pressure force estimation unit and the rotational information obtained by said rotational information obtaining unit.

3. The electric braking apparatus according to claim 1 or 2, wherein
said correction unit (102) estimates the pressure force with which said brake friction member is pressed against said brake rotor based on the current value of said electric motor obtained by said current value information obtaining unit when an absolute value of the rotational angular acceleration velocity of said electric motor obtained by said rotational information obtaining unit is a predetermined rotational angular acceleration velocity of lower, and corrects the rotational position set by said rotational position setting unit based on the relationship between the pressure force estimated by said pressure force estimation unit and the rotational information obtained by said rotational information obtaining unit.

4. The electric braking apparatus according to at least one of claims 1 to 3,
wherein said correction unit (102) estimates the pressure force with which said brake friction member is pressed against said brake rotor based on the current value of said electric motor when the rotational angular velocity of said electric motor obtained by said rotational information obtaining unit is a predetermined rotational angular velocity or lower and also when an absolute value of the rotational angular acceleration velocity of said electric motor obtained by said rotational information obtaining unit is a predetermined rotational angular acceleration velocity of lower, and wherein said correction unit corrects the relationship with the rotational position responsive to the pressure force command set by said rotational position setting unit based on the relationship between said estimated pressure force and rotational information obtained by said rotational information obtaining unit.

5. The electric braking apparatus according to at least one of claims 1 to 4, wherein
in said correction unit (101), when said rotational position setting unit (100) obtained said pressure force release command, the drive current of said electric motor is controlled to be zero for a given time,
and the pressure force with which said brake friction member is pressed against said brake rotor is estimated based on the rotational angular velocity of said electric motor obtained by said rotational information obtaining unit at said predetermined time, and

the relation with the rotational position is corrected according to the pressure force command set by said rotational position setting unit based on the relationship between the pressure force estimated by said pressure force estimation unit and the rotational information obtained by said rotational information obtaining unit.

**6.** The electric braking apparatus according to at least one of claims 1 to 5, wherein
in said correction unit (101), when said rotational position setting unit (100) obtained said pressure force release command, the rotational angular velocity of said electric motor is controlled to be a predetermined rotational angular velocity until said brake friction member is released from said brake rotor,

the pressure force with which said brake friction member are pressed against said brake rotor is estimated based on current value of said electric motor obtained by said current information obtaining unit when the rotational angular velocity of said electric motor is a predetermined rotational angular velocity, and

the relationship with the rotational position is corrected according to the pressure force command set by said rotational position setting unit based on the relationship between said estimated pressure force and the rotational information obtained by said rotational information obtaining unit.

**7.** The electric braking apparatus according to at least one of claims 1 to 6, wherein
said correction unit (102)

controls the drive current of said electric motor to be zero for a given time when said rotational position setting unit (100) obtained said pressure force release command, and after said given time elapsed,

controls the rotational angular velocity of said electric motor to be a predetermined rotational angular velocity until said brake friction member are released from said brake rotor,

estimates a pressure force with which said brake friction member is pressed against said brake rotor based on the rotational angular acceleration velocity of said electric motor obtained by said rotational information obtaining unit at said predetermined time, and the current value of said electric motor obtained by said current information obtaining unit when the rotational angular velocity of said electric motor is said predetermined rotational angular velocity, and

corrects the relationship with the rotational position responsive to the pressure force command by said rotational position setting unit based on the relationship between said estimated pressure force and the rotational information obtained by said rotational information obtaining unit.

**8.** The electric braking apparatus according to at least one of claims 1 to 7, wherein
said correction unit (102)

controls the drive current of said electric motor to be zero for a given time when said rotational position setting unit (100) obtained a release command of a pressure force of a predetermined range or more from said pressure force after said command obtaining unit obtained a pressure force command to continue a pressure force of a predetermined variation width for a given time,

estimates a pressure force with which said brake friction member is pressed against said brake rotor based on the rotational angular velocity of said electric motor obtained by said rotational information obtaining unit at the predetermined time, and

corrects the relationship with the rotational position responsive to the pressure force command set by said rotational position setting unit based on the relationship between said estimated pressure force and the rotational information obtained by said rotational information obtaining unit.

**9.** The electric braking apparatus according to at least one of claims 1 to 8, wherein
said correction unit (102)

controls the rotational angular velocity of said electric motor until said brake friction member moves away from said brake rotor to achieve a predetermined rotational angular velocity when said rotational position setting unit (100) obtained a release command of a pressure force of a predetermined range or more from said pressure force after obtaining a pressure force command to continue a pressure force with a predetermined variation width for a given time,

estimates a pressure force with which said brake friction member is pressed against said brake rotor based on the current value of said electric motor obtained by said rotational information obtaining unit when the rotational angular velocity of said electric motor is said predetermined constant rotational angular velocity, and

corrects the relationship with the rotational position responsive to the pressure force command which is set by said rotational position setting unit.

**10.** The electric braking apparatus according to at least one of claims 1 to 9, wherein
said correction unit (102)

controls the drive current of said electric motor for a given time such that it becomes zero when said rotational position setting unit (100) obtained a command to release a pressure force of a predetermined range or more after obtaining a command to continue a pressure force with a predetermined variation width for a given time, and controls the rotational angular velocity until said brake friction member moves away from said brake rotor such that it achieves a predetermined constant rotational angular velocity after said given time elapsed, estimates the pressure force with which said brake friction member is pressed against said brake rotor based on the rotational angular velocity of said electric motor obtained by said rotational information obtaining unit at said predetermined time and the current value of said electric motor obtained by said current value information obtaining unit when the rotational angular velocity of said electric motor is said predetermined constant rotational angular velocity, and corrects the relation with the rotational position responsive to the pressure force command which is set by said rotational position setting unit based on the relationship between said estimated pressure force and the rotational information which is obtained by said rotational information obtaining unit.

11. An electric braking apparatus, comprising:

a braking force generating unit including brake friction member pressed against a brake rotor that rotates along with a wheel, an electric motor generating rotational torque, a conversion mechanism for generating a force for pressing or separating said brake friction member against or from said brake rotor based on the rotational torque, and a parking brake mechanism for holding the rotation of said electric motor such that said brake friction member is pressed against said brake rotor without generating said rotational torque to cause the wheel to generate a braking force; and
a control circuit unit (1251) for controlling rotational torque of the electric motor,

wherein said control circuit unit, comprises:

a rotational information obtaining unit (1351, 1527) for obtaining rotational information of said electric motor;
a parking brake actuation/release determination unit (402) for obtaining a command of actuation or release of the parking brake and determining actuation or release of the parking brake; a rotational position setting unit (100) for obtaining a pressure force generation command or a pressure force release command and setting the rotational position of said electric motor in accordance with the pressure force generation command or the pressure force release command;
an electric motor control unit (101, 1531, 1517) for controlling the rotational torque of said electric motor based on the rotational position which is set by said rotational position setting unit and rotational position of said electric motor which is obtained by said rotational information obtaining unit;
an current value information obtaining unit (1391) for obtaining information on current value supplied to said electric motor; and
a correction unit (102) for estimating the pressure force with which said brake friction member is pressed against said brake rotor based on the rotational angular velocity of said electric motor which is obtained by said rotational information obtaining unit at said predetermined time, and for correcting the relationship with the rotational position responsive to the pressure force command which is set by said rotational position setting unit based on the relationship between said estimated pressure force and the rotational information obtained by said rotational information obtaining unit.

12. The electric braking apparatus according to claim 11, wherein
said correction unit (102) estimates the pressure force with which said brake friction member is pressed against said brake rotor based on the current value of said electric motor obtained by said current value information obtaining unit when an absolute value of the rotational angular velocity of said electric motor obtained by said rotational information obtaining unit is a predetermined rotational angular velocity of lower, and corrects the rotational position set by said rotational position setting unit based on the relationship between the pressure force estimated by said pressure force estimation unit and the rotational information obtained by said rotational information obtaining unit.

13. The electric braking apparatus according to at least one of claims 1 to 12, wherein
said correction unit (102) estimates the pressure force with which said brake friction member is pressed against said brake rotor based on the current value of said electric motor obtained by said current value information obtaining unit when an absolute value of the rotational angular acceleration velocity of said electric motor obtained by said rotational information obtaining unit is a predetermined rotational angular acceleration velocity of lower, and corrects the rotational position set by said rotational position setting unit based on the relationship between the pressure force estimated by said pressure force estimation unit and the rotational information obtained by said rotational information obtaining unit.

14. The electric braking apparatus according to at least one of claims 11 to 13, wherein
said correction unit (102) estimates the pressure force with which said brake friction member is pressed against said brake rotor based on the current value of said electric motor when the rotational angular velocity of said electric motor obtained by said rotational information obtaining unit is a predetermined rotational angular velocity or lower and also when an absolute value of the rotational angular acceleration velocity of said electric motor obtained by said rotational information obtaining unit is a predetermined rotational angular acceleration velocity of lower, and
wherein said correction unit corrects the relationship with the rotational position responsive to the pressure force command set by said rotational position setting unit based on the relationship between said estimated pressure force and rotational information obtained by said rotational information obtaining unit.

15. The electric braking apparatus according to at least one of claims 11 to 14, wherein
in said correction unit (101), when said rotational position setting unit (100) obtained said pressure force release command, the drive current of said electric motor is controlled to be zero for a given time,
and the pressure force with which said brake friction member is pressed against said brake rotor is estimated based on the rotational angular velocity of said electric motor obtained by said rotational information obtaining unit at said predetermined time, and
the relation with the rotational position is corrected according to the pressure force command set by said rotational position setting unit based on the relationship between the pressure force estimated by said pressure force estimation unit and the rotational information obtained by said rotational information obtaining unit.

16. The electric braking apparatus according to at least one of claims 11 to 15, wherein
in said correction unit (101), when said rotational position setting unit (100) obtained said pressure force release command, the rotational angular velocity of said electric motor is controlled to be a predetermined rotational angular velocity until said brake friction member is released from said brake rotor,
the pressure force with which said brake friction member is pressed against said brake rotor is estimated based on current value of said electric motor obtained by said current information obtaining unit when the rotational angular velocity of said electric motor is a predetermined rotational angular velocity, and
the relationship with the rotational position is corrected according to the pressure force command set by said rotational position setting unit based on the relationship between said estimated pressure force and the rotational information obtained by said rotational information obtaining unit.

17. The electric braking apparatus according to at least one of claim 11 to 16, wherein
said correction unit (102)
controls the drive current of said electric motor to be zero for a given time when said rotational position setting unit (100) obtained said pressure force release command, and after said given time elapsed,
controls the rotational angular velocity of said electric motor to be a predetermined rotational angular velocity until said brake friction member is released from said brake rotor,
estimates a pressure force with which said brake friction member is pressed against said brake rotor based on the rotational angular acceleration velocity of said electric motor obtained by said rotational information obtaining unit at said predetermined time, and the current value of said electric motor obtained by said current information obtaining unit when the rotational angular velocity of said electric motor is said predetermined rotational angular velocity, and
corrects the relationship with the rotational position responsive to the pressure force command by said rotational position setting unit based on the relationship between said estimated pressure force and the rotational information obtained by said rotational information obtaining unit.

18. The electric braking apparatus according to at least one of claims 11 to 17, wherein
said correction unit (102)
controls the drive current of said electric motor to be zero for a given time when said rotational position setting unit (100) obtained a release command of a pressure force of a predetermined range or more from said pressure force after said command obtaining unit obtained a pressure force command to continue a pressure force of a predetermined variation width for a given time,
estimates a pressure force with which said brake friction member is pressed against said brake rotor based on the rotational angular velocity of said electric motor obtained by said rotational information obtaining unit at the predetermined time, and
corrects the relationship with the rotational position responsive to the pressure force command set by said rotational position setting unit based on the relationship between said estimated pressure force and the rotational information obtained by said rotational information obtaining unit.

19. The electric braking apparatus according to at least one of claims 11 to 18, wherein
said correction unit (102)
controls the rotational angular velocity of said electric motor until said brake friction member moves away from said brake rotor to achieve a predetermined rotational angular velocity when said rotational position setting unit (100) obtained a release command of a pressure force of a predetermined range or more from said pressure force after obtaining a pressure force command to continue a pressure force with a predetermined variation width for a given time, estimates a pressure force with which said brake friction member is pressed against said brake rotor based on the current value of said electric motor obtained by said rotational information obtaining unit when the rotational angular velocity of said electric motor is said predetermined constant rotational angular velocity, and corrects the relationship with the rotational position responsive to the pressure force command which is set by said rotational position setting unit.

20. The electric braking apparatus according to at least one of claims 11 to 19, wherein
said correction unit (102)
controls the drive current of said electric motor for a given time such that it becomes zero when said rotational position setting unit (100) obtained a command to release a pressure force of a predetermined range or more after obtaining a command to continue a pressure force with a predetermined variation width for a given time, and controls the rotational angular velocity until said brake friction member moves away from said brake rotor such that it achieves a predetermined constant rotational angular velocity after said given time elapsed, estimates the pressure force with which said brake friction member is pressed against said brake rotor based on the rotational angular velocity of said electric motor obtained by said rotational information obtaining unit at said predetermined time and the current value of said electric motor obtained by said current value information obtaining unit when the rotational angular velocity of said electric motor is said predetermined constant rotational angular velocity, and corrects the relation with the rotational position responsive to the pressure force command which is set by said rotational position setting unit based on the relationship between said estimated pressure force and the rotational information which is obtained by said rotational information obtaining unit.

21. The electric braking apparatus according to at least one of claims 11 to 20, wherein
said correction unit (102) controls the drive current of said electric motor for a given time such that it becomes zero when said parking brake actuation/release determination unit (402) obtains a command to release said parking brake mechanism, and for estimating the pressure force with which said brake friction member is pressed against said brake rotor based on the rotational angular velocity of said electric motor which is obtained by said rotational information obtaining unit at said predetermined time, and corrects the relationship with the rotational position responsive to the pressure force command which is set by said rotational position setting unit based on the relationship between said estimated pressure force and the rotational information obtained by said rotational information obtaining unit.

22. The electric braking apparatus according to at least one of claims 11 to 21, wherein said correction unit (102) controls the rotational angular velocity of said electric motor until said brake friction member moves away from said brake rotor to be a predetermined constant rotational angular velocity when said parking brake actuation/release determination unit (402) obtained said command to release the parking brake mechanism, estimates the pressure force with which said brake friction member is pressed against said brake rotor based on current value of said electric motor obtained by said current information obtaining unit when the rotational angular velocity of said electric motor is a predetermined rotational angular velocity, and corrects the relationship with the rotational position responsive to the pressure force command set. by said rotational position setting unit based on the relationship between said estimated pressure force and the rotational information obtained by said rotational information obtaining unit.

23. The electric braking apparatus according to at least one of claims 11 to 22, wherein said correction unit (102) controls the drive current of said electric motor for a given time such that it becomes zero when said parking brake actuation/release determination unit (402) obtained said command to release the parking brake mechanism; further controls the rotational angular velocity of said electric motor until said brake friction member moves away from said brake rotor after the elapse of said predetermined time period; estimates the pressure force with which said brake friction member is pressed against said brake rotor based on the rotational angular velocity of said electric motor obtained by said rotational information obtaining unit at said predetermined time as well as the current value of said electric motor when the rotational angular velocity of said electric motor is a predetermined constant rotational angular velocity; and

corrects the relation with the rotational position responsive to the pressure force command set by said rotational position setting unit based on the relationship between said estimated pressure force and the rotational information obtained by said rotational information obtaining unit.

24. A method of controlling an electric braking apparatus, said apparatus including brake friction member pressed against a brake rotor that rotates along with a wheel, an electric motor generating rotational torque, a conversion mechanism for generating a force to suppress or separate said brake friction member from or against said brake rotor based on the rotational torque, and a parking brake mechanism for holding the rotation of said electric motor such that said brake friction member is pressed against said brake rotor without generating said rotational torque to cause the wheel to generate a braking force, said method comprising the steps of:

obtaining a command to generate a pressure force or a command to release the pressure force;
obtaining a command to activate or release said parking brake;
obtaining the rotational information of said electric motor;
setting the rotational position of said electric motor in response to said pressure force generation command or pressure force release command;
controlling the rotational torque of said electric motor based on said set rotational information and said obtained rotational information;
obtaining information on the value of current supplied to said electric motor;
estimating the pressure force with which said brake friction member is pressed against said brake rotor based on the obtained current value of said electric motor when the absolute value of the rotational angular velocity of said electric motor calculated from the estimated said rotational information is a predetermined rotational angular velocity or lower; and
correcting the relation of the rotational position of said electric motor responsive to said pressure force command based on the relationship between said estimated pressure force and said obtained rotational information.

25. The method of controlling an electric braking apparatus according to claim 24, further comprising the steps of:

estimating the pressing force with which said brake friction member is pressed against said brake rotor based on the obtained current value of said electric motor when the absolute value of the rotational angular velocity of said electric motor calculated from the estimated said rotational information is a predetermined rotational angular velocity or lower; and
correcting the relation of the rotational position of said electric motor responsive to said pressure force command based on the relationship between said estimated pressure force and said obtained rotational information.

26. The method of controlling an electric braking apparatus according to claim 24 or 25, further comprising the steps of:

estimating the pressing force with which said brake friction member is pressed against said brake rotor based on the obtained current value of said electric motor when the absolute value of the rotational angular acceleration velocity of said electric motor calculated from the estimated said rotational information is a predetermined rotational angular velocity or lower; and
correcting the relation of the rotational position of said electric motor responsive to said pressure force command based on the relationship between said estimated pressure force and said obtained rotational information.

27. The method of controlling an electric braking apparatus according to at least one of claims 24 to 26, further comprising the steps of:

controlling the drive current of said electric motor to be zero when said pressure force release command is obtained;
estimating the pressure force with which said brake friction member is pressed against said brake rotor based on the rotational angular velocity of said electric motor at said predetermined time; and
correcting the relation of the rotational position of said electric motor responsive to said pressure force command based on the relationship between said estimated pressure force and said obtained rotational information.

28. The method of controlling an electric braking apparatus according to at least one of claims 24 to 27, further comprising the steps of:

controlling the rotational angular velocity of said electric motor until said brake friction member moves away from said brake rotor when said pressure force release command is obtained;

estimating the pressing force with which said brake friction member is pressed against said brake rotor based on the current value of said electric motor when the rotational angular velocity of said electric motor is predetermined angular velocity; and

correcting the relation of the rotational position of said electric motor responsive to said pressure force command based on the relationship between said estimated pressure force and said obtained rotational information.

29. The method of controlling an electric braking apparatus according to at least one of claims 24 to 28, further comprising the steps of:

controlling the drive current of said electric motor for a predetermined time such that the drive current becomes zero when a command is obtained to release a pressure force with a predetermined strength from said pressure force after a command is obtained to continue the pressing with a predetermined range;

estimating the pressure force for pressing said brake friction member against said brake rotor based on the rotational angular velocity of said electric motor at a predetermined time; and

correcting the relation of the rotational position of said electric motor responsive to said pressure force command based on the relationship between said estimated pressure force and said obtained rotational information.

30. The method of controlling an electric braking apparatus according to at least one of claims 24 to 29, further comprising the steps of:

controlling the rotational angular velocity of said electric motor until said brake friction member moves away from said brake rotor such that it reaches a predetermined constant rotational angular velocity when a command is obtained to release a pressure force of a predetermined range from said pressure force after a command is obtained to continue the pressure of a predetermined range for a predetermined time;

estimating the pressure force with which said brake friction member is pressed against said brake rotor based on the current value of said electric motor when the rotational angular velocity of said electric motor is a predetermined constant rotational angular velocity; and

correcting the relation of the rotational position of said electric motor responsive to said pressure force command based on the relationship between said estimated pressure force and said obtained rotational information.

31. The method of controlling an electric braking apparatus according to at least one of claims 24 to 30, further comprising the steps of:

controlling the drive current of said electric motor for a given time such that it becomes zero when receiving a release command of said parking brake mechanism;

estimating the pressure force with which said brake friction member is pressed against said brake rotor based on the rotational velocity of said electric motor at a predetermined time; and

correcting the relation of the rotational position of said electric motor responsive to said pressure force command based on the relationship between said estimated pressure force and said obtained rotational information.

32. The method of controlling an electric braking apparatus according to at least one of claims 24 to 31, further comprising the steps of:

controlling the rotational angular velocity of said electric motor until said brake friction member moves away from said brake rotor when a command is obtained to release said parking brake mechanism; estimating the pressure force with which said brake friction member is pressed against said brake rotor based on the current value of said electric motor when the rotational angular velocity of said electric motor is a predetermined angular velocity; and

correcting the relation of the rotational position of said electric motor responsive to said pressure command based on the relationship between said estimated pressure force and said obtained rotational information.

## FIG. 1

# FIG. 2

# FIG. 3

EP 1 892 164 A2

# FIG. 4

1201

1241

1306 1307 1331 1326 1321 1341 1301 1311 1352 1251

α

1231

ROTATION / LINEAR MOTION CONVERSION MECHANISM

REDUCTION GEAR

MOTOR

INVERTER — 1517

1261

LOWER LEVEL CONTROL CIRCUIT

1299

HOST CONTROL CIRCUIT

ENGINE CONTROL UNIT — 1381

AUTOMATIC TRANSMISSION CONTROL UNIT — 1383

1599

1351 1355

210 1282 1281

1395

VEHICLE CENTER SIDE

EP 1 892 164 A2

# FIG. 5

EP 1 892 164 A2

# FIG. 6

EP 1 892 164 A2

# FIG. 7

# FIG. 8A

PRESSURE
FORCE

ORDINARY
TEMPERATURE

LOW
TEMPERATURE

HIGH
TEMPERATURE

0
0

MOTOR ROTOR
POSITION ANGLE

# FIG. 8B

PRESSURE
FORCE

MODERATELY
ABRADED BRAKE PAD

HEAVILY ABRADED
BRAKE PAD

BRAND NEW
BRAKE PAD

LOPSIDED
ABRADED PAD

0
0

MOTOR ROTOR
POSITION ANGLE

# FIG. 9

EP 1 892 164 A2

# FIG.10

# FIG. 11

# FIG.12

# FIG.13

# FIG.14

PARKING BRAKE
ACTUATION / RELEASE 402
COMMAND

210

1372

PARKING BRAKE
ACTUATION / RELEASE
DETERMINATION
BLOCK

1537

PKB
SOLENOID
DRIVER

PKB
SOLENOID

PRESSURE
FORCE
COMMAND
VALUE Fcom

100

MOTOR ROTOR
POSITION ANGLE
COMMAND VALUE

101

1517

1391

1311

PRESSURE FORCE
COMMAND / MOTOR
ROTOR POSITION ANGLE
COMMAND CONVERSION BLOCK

Xcom

MOTOR ROTOR
POSITION ANGLE
CONTROL
PROCESSING BLOCK

INVERTER

MOTOR

401

EACH PHASE
CURRENT

102

CORRECTION
MEANS
SELECTION
BLOCK

403

MOTOR ROTOR
POSITION ANGLE
Xreal

1351

FIRST
CORRECTION
BLOCK

1503

CORRECTION
TABLE 1

400

SECOND
CORRECTION
BLOCK

CORRECTION
TABLE 2

1501

EP 1 892 164 A2

# FIG.15

PRESSURE FORCE COMMAND VALUE

PARKING BRAKE ACTUATION / RELEASE COMMAND

401

500

CORRECTION TABLE SELECTION BLOCK

501

CORRECTION TABLE

CORRECTION TABLE 1

Fest1(Xact)

CORRECTION TABLE 2

Fest2(Xact)

EP 1 892 164 A2

# FIG.16

```
                    ┌─────────────┐
                    │    START    │
                    └──────┬──────┘
                           │
                           ▼
              ╱─────────────────────╲        No
      600 ───◇   |Fcom_z1−Fref|      ◇──────────────────┐
              ╲      ≦ΔFth？         ╱                   │
               ╲───────────────────╱                    │
                           │                             ▼
                           │ Yes           604 ──┌───────────────┐
                           ▼                      │ Fref=Fcom_z1  │
      601 ──┌───────────────┐                    └───────┬───────┘
            │     Cnt++      │                           │
            └───────┬───────┘                            ▼
                    │              605 ──┌───────────────┐
                    ▼                    │    Cnt=0      │
              ╱──────────╲               └───────┬───────┘
      602 ───◇ Cnt≧Cth？ ◇── No                  │
              ╲──────────╱ ────────┐             │
                    │              │             │
                    │ Yes         │             ▼
                    ▼             ▼
      603 ──┌───────────────┐   606 ──┌───────────────┐
            │   Flag=ON      │         │   Flag=0FF     │
            └───────┬───────┘         └───────┬───────┘
                    │                         │
                    └────────────┬────────────┘
                                 ▼
                         ┌─────────────┐
                         │     END     │
                         └─────────────┘
```

# FIG.17

```
                    ┌──────────┐
                    │  START   │
                    └──────────┘
                          │
                          ▼
700 ───      ◇ Fcom_z1−Fcom              No
             ◇  > ΔFrelease ? ◇ ──────────┐
                          │               │
                         Yes              │
                          │               │
701 ───       ◇ Flag=ON ? ◇ ──No───┐      │
                          │         │     │
                         Yes        │     ▼
                          │      703 ◇ PARKING          No
                          │         ◇ BRAKE RELEASE ◇────┐
                          │         ◇  COMMAND?  ◇        │
                          │               │              │
                          │              Yes             │
                          ▼               │              ▼
702 ─ ┌──────────────┐    │          704 ─┌──────────────┐
      │   SELECT      │◀───┘              │   SELECT      │
      │  Fest2(Xact)  │                   │  Fest1(Xact)  │
      └──────────────┘                    └──────────────┘
             │                                    │
             ▼◀──────────────────────────────────┘
      ┌──────────┐
      │   END    │
      └──────────┘
```

36

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0145245 A